Europäisches Patentamt

European Patent Office

Office européen des brevets

(11) Veröffentlichungsnummer: **0 032 112**
**B2**

(12) # NEUE EUROPÄISCHE PATENTSCHRIFT

(45) Veröffentlichungstag der neuen Patentschrift:
02.08.89

(51) Int. Cl.⁴: **F 16 K  31/00,** G 05 D  23/00

(21) Anmeldenummer: 81100011.6

(22) Anmeldetag: 03.01.81

(54)  **Thermostatanordnung für Ventilsteuerung.**

(30)  Priorität: 07.01.80  DE 3000388

(43)  Veröffentlichungstag der Anmeldung:
15.07.81 Patentblatt 81/28

(45)  Bekanntmachung des Hinweises auf die Patenterteilung:
21.03.84 Patentblatt 84/12

(45)  Bekanntmachung des Hinweises auf die Entscheidung
über den Einspruch:
02.08.89 Patentblatt 89/31

(84)  Benannte Vertragsstaaten:
AT CH DE FR LI

(56)  Entgegenhaltungen:
DE-A-1 579 976
DE-A-2 503 167
DE-A-2 625 421
DE-A-2 847 482
DE-B-1 798 294
DE-U-7 922 618

Danfoss Journal 3/68 S. 4

(73)  Patentinhaber: Luik, Manfred, Ulmer Strasse 18,
D-7250 Leonberg (DE)

(72)  Erfinder: Luik, Manfred, Ulmer Strasse 18, D-7250
Leonberg (DE)

(74)  Vertreter: Schweikhardt, Friedrich, Dipl.- Ing.,
Schulstrasse 27, D-7250 Leonberg 7 Warmbronn
(DE)

EP 0 032 112 B2

## Beschreibung

Die vorliegende Erfindung betrifft eine Thermostatanordnung für Ventilsteuerung mit einem Thermostaten, der einen Dehnstoff enthaltenden Dehnkörper hat, welcher temperaturabhängig einen das Schließglied des Ventils beeinflussenden Stößel verstellt und undrehbar an einem mittels eines Klemmrings am Gehäuse des Ventils angebrachten Halter befestigt ist, wobei ein Heizelement so angeordnet ist, daß es mit dem Dehnkörper in wärmeleitender Verbindung steht.

Aus der DE-A-2 625 421 ist eine Thermostateinrichtung bekannt mit einem Heizelement, das mit dem Dehnkörper in wärmeleitender Verbindung steht. Das Heizelement ist an der Stirnseite des Dehnkörpers, z. B. in Form einer Widerstandsschicht an einer Platte angebracht, die auch andere elektrische Bauteile trägt, und von der die Anschlußleitungen ausgehen. Alle diese Teile sind mit dem zum Einstellen der Temperatur dienenden Drehgriff verbunden. Die Anschlußleitungen erlauben daher nur ein begrenztes Verdrehen des Drehgriffes, was die Konstruktion und Anbringung erschwert. Die Widerstandsschicht kann nicht unmittelbar an dem Dehnkörper anliegen, da sie ihm gegenüber verdreht werden muß. Sie ist ihrer Art und Anbringung nach wenig wirksam, so das verhältnismäßig viel Energie verbraucht wird. Der Einbau der Platte setzt eine bestimmte Konstruktion des Drehgriffes und eines mit ihm verbundenen Gehäuses voraus, was eine gewisse Verteuerung der Anordnung bedeutet.

Es ist auch aus der DE-A-1 579 976 bekannt, an einem mit dem Dehnkörper eines Thermostaten verbundenen Stutzen ein als Heizelement dienendes Röhrchen anzubringen. Dessen Wärmeeinfluß auf den Dehnkörper ist aber nicht genau zu bestimmen, schwankend und begrenzt, da das Röhrchen den Dehnkörper selbst nicht berührt, sondern in nicht genau definierbarer Weise auf dem Stutzen sitzt, so daß der Querschnitt für den Wärmeübergang nicht genau festliegt und außerdem durch den Querschnitt des Stutzens begrenzt ist.

Die das Heizelement versorgende Leitung ist lose herausgeführt und muß irgendwo außerhalb der Thermostatanordnung befestigt werden, was die Montage erschwert. Ein an der Leitung auftretender Zug kann den Wärmekontakt des Röhrchens weiter beeinträchtigen. Das Röhrchen muß bei der Fertigung der Thermostatanordnung eingebaut werden.

Nun sind zahlreiche Thermostatventile im Gebrauch, welche kein Heizelement enthalten. Um Energie zu sparen, wird aber mehr und mehr verlangt, daß eine Temperaturabsenkung zu bestimmten Zeiten möglich ist. Nach dem bekannten Stand der Technik wäre man gezwungen, um dies zu erreichen die bisherigen Thermostatanordnungen gegen andere, mit einem Heizelement ausgestattete auszutauschen. Das wäre sehr aufwendig.

Daher besteht die Aufgabe, eine Thermostatanordnung zu schaffen, welche einerseits eine eindeutige und verläßliche Temperaturabsenkung zu steuern erlaubt und andererseits unter Verwendung bestehender Anordnungen hergestellt werden kann.

Diese Aufgabe wird nach der Erfindung dadurch gelöst, daß in eine Ausnehmung des Halters das als Heizpatrone ausgebildete Heizelement so eingesetzt ist, daß es den Dehnkörper berührt, und daß ein von ihm nach außen führendes Zuleitungskabel an dem Kalter mit Hilfe eines Klemmrings befestigt und zu einer insbesondere handelsüblichen Zeitschaltuhr geführt ist, welche in einstellbaren Zeiträumen der Heizpatrone einen bestimmten Heizstrom zuführt, und daß die Heizpatrone zusammen mit dem Klemmring einen Nachrüstsatz bildet, dessen Klemmring einen den Thermostaten am Ventil festhaltenden Klemmring ersetzt und eine zusätzliche Klemmeinrichtung für das Zuleitungskabel hat.

Die Heizpatrone kann dabei unmittelbar an dem Dehnkörper anlegen, da sie sich nicht dreht, und ihre Wärme verlustlos an diesen übertragen, so daß mit sehr geringer Energie, das heißt mit Schwachstrom geringer Spannung, gearbeitet werden kann. Der Drehgriff kann ohne Rücksicht auf angebaute elektrische Teile möglichst wirtschaftlich konstruiert sein und ist in seiner Einstellbewegung nicht behindert, das das Zuleitungskabel an dem Halter den Thermostaten in axialer Richtung verläßt. Als Steuerteile müssen keine besonders montierten Elemente verwendet werden; man kann vielmehr auf handelsübliche Elemente zurückgreifen. An der Konstruktion des Thermostaten ist keine Änderung nötig. Die Heizpatrone kann mit dem Zuleitungskabel als billiges Einbauteil geliefert werden, insbesondere zusammen mit einem auch das Zuleitungskabel enthaltenden Klemmring. Es kann ohne Änderung in schon an Heizkörpern montierte Thermostatanordnungen eingesetzt, werden. So ist es möglich, Ventile, die keine Zeitsteuerung haben, mit wenig Aufwand umzurüsten und die Anordnung wirksam und energiesparend zu betreiben. Ein solcher Nachrüstsatz eignet sich daher für die Umstellung einer jeweils großen Anzahl von Thermostaten. Wenn der Widerstand der Heizpatrone entsprechend bemessen wird, kann die Ausgangsspannung eines Gleichrichters unmittelbar als Maß für die gewünschte Temperaturabsenkung dienen, so daß auch die Markierung handelsüblicher Geräte das eindeutige und rasche Einstellen erlaubt.

Ein Ausführungsbeispiel der Erfindung ist in der Zeichnung dargestellt. Es zeigen:

Figur 1    einen Längsschnitt durch Ventil und Thermostat,
Figur 2    einen Klemmring nach der Erfindung,
Figur 3    einen Gleichrichter von vorn,
Figur 4    diesen Gleichrichter von der Seite,
Figur 5    eine Zeitschaltuhr von vorn,
Figur 6    diese Zeitschaltuhr von der Seite.

Im dem Gehäuse 1 eines Ventils 2 liegt ein Durchlaß 3, dem ein Schließglied 4 zugeordnet ist. Es ist mit einem Schaft 5 versehen, der durch ein Lagerstück 6 in einem Hals 7 des Gehäuses 1 geführt ist. Eine Druckfeder 8, die sich einerseits an dem Lagerstück 6, andererseits an einem Bund 9 des Schafts 5 abstützt, sucht den Schaft 5 bei Offenstellung des Schließgliedes 4 aus dem Gehäuse heraus zu schieben. Der Hals 7 hat an seinem äußeren Ende einen Wulst 10. Ein Thermostat 11 ist auf den Hals 7 des Ventils 2 aufgesetzt. Ein Halter 12 des Thermostaten übergreift zu diesem Zweck das Ende des Halses 7 und paßt mit einer Rille 13 auf den Wulst 10. Das Ende des Halters 12 ist geschlitzt, damit es auf den Hals 7 geschoben werden kann. Es wird nach dem Aufsetzen von einem Klemmring zusammengedrückt.

An dem entgegengesetzten Ende des Halters 12 ist ein Dehnkörper 14 befestigt, der mit komprimiertem Gas gefüllt ist. Er hat im wesentlichen Topfform. Seine Innenseite ist balgartig ausgebildet und hat eine Stirnfläche 15. Gegen diese legt sich ein Stössel 16 unter der Kraft einer Druckfeder 17. Deren aus dem Dehnkörper 14 herausragendes Ende stützt sich an einer Brücke 18 ab. Diese greift mit Armen 19 durch Schlitze 20 des Halters 12 und an ihrem Umfang mit einem Stellgewinde 21 in eine Kappe 22. Diese ist auf dem Dehnkörper 14 gleitend geführt und wird von der Druckfeder 17 an diesen angelegt. Sie hat Schlitze 23, welche der Außenluft Zutritt zu dem Dehnkörper 14 erlauben.

Das beschriebene Thermostatventil arbeitet in bekannter Weise. Wenn die Raumtemperatur über die gewünschte Temperatur zunimmt, steigt der Druck des Gases im Dehnkörper 14. Dadurch schiebt die Stirnfläche 15 den Stöße 16 gegen das Ventil 2, dessen Schatt 5 unter der Kraft der Druckfeder 8 an dem Stöße 16 anliegt, und verschiebt das Schließglied 4 in Schließrichtung. Das Ventil 2 wird mehr oder weniger geschlossen, die Heizung wird vermindert. Sinkt die Raumtemperatur wieder, so läßt der Druck des Gases im Dehnkörper 14 nach, und die Druckfeder 17 öffnet das Ventil wieder. Die einzuregelnde Normaltemperatur wird durch Drehen der Kappe 22 eingestellt. Sie verschiebt die Brücke 18 so, daß sich die Spannung der Druckfeder 17 im gewünschten Ausmaß ändert, wodurch der Gleichgewichtszustand zwischen der Ausdehnung des Dehnkörpers 14 und der Spannung der Druckfeder 17 auf eine andere Temperatur verlegt wird.

Nach der Erfindung wird der Thermostat so verbessert, daß er zeitabhängig eine andere als die an ihm eingestellte Normaltemperatur einregelt. Dazu wird eine Heizpatrone 24 in einen Längsschlitz 25 des Halters 12 eingeschoben. Sie ist so bemessen, daß sie genau in diesen Halter paßt und sich dadurch festklemmt, insbesondere ein wenig konisch ausgeführt. Die Heizpatrone 24 ist mit einem Zuleitungskabel 26 verbunden, das am Ende einen Stecker 27 trägt. Anstelle des üblichen Klemmringes wird ein Klemmring 28 aufgesetzt (Fig. 2). Er hat wie üblich eine Trennstelle, die mit Hilfe einer Klemmschraube 29 zusammengepreßt werden kann. Dadurch wird der Halter 12 auf dem Hals 7 festgelegt. Außerdem hat der Klemmring 28 zwei Backen 30, die mit einer Schraube 31 zusammengedrückt werden können. Zwischen ihnen wird in Aussparungen 32 das Zuleitungskabel 26 aufgenommen und durch Anziehen der Schraube 31 festgelegt. Damit ist der Thermostat selbst umgerüstet.

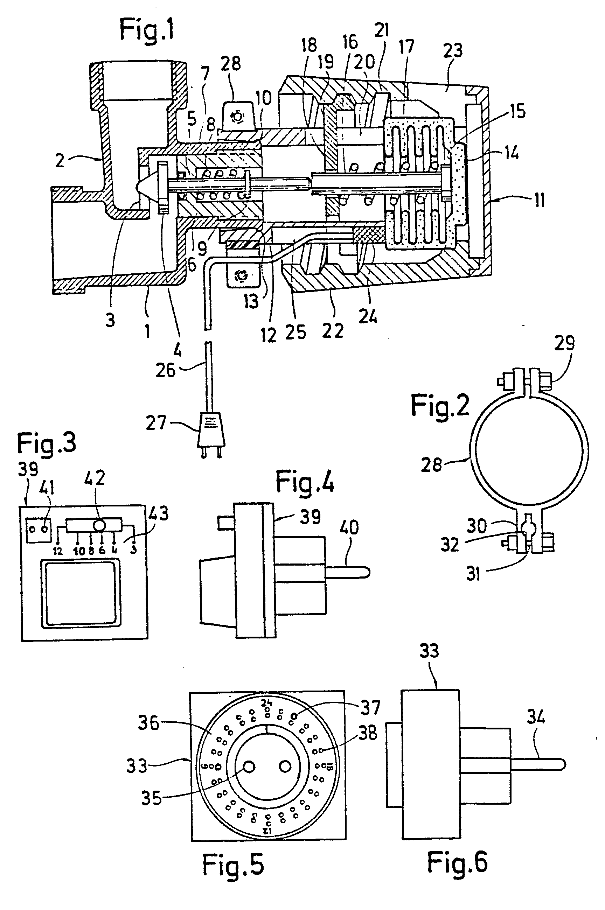

Eine Zeitschaltuhr 33 (Fig. 5 und 6) hat in eine Steckdose passende Kontaktstifte 34 und auf ihrer Stirnseite einer Steckdose entsprechende Buchsen 35, ferner einen Einstellring 36, in den je nach der gewünschten Schaltzeit für das Ein- und Ausschalten Stitte 37 in über zwei Kreise verteilte Löcher 38 gesteckt werden. Diese Zeitschaltuhr ist handelsüblich. Sie wird mit den Kontaktstiften 34 in eine Steckdose gesteckt.

Ein zugehöriger Gleichrichter 39 ist in den Fig. 3 und 4 dargestellt. Er besitzt Kontakte 40, die in die Buchsen 35 der Zeitschaltuhr 33 passen, ferner Buchsen 41 und einen Stellknopf 42, mit dessen Hilfe die an den Buchsen 41 abgegebene Spannung eingestellt wird. Eine zugehörige Skala 43 zeigt diese Spannung an. Sie liegt beispielsweise zwischen 3 und 12 Volt.

Die Heizpatrone 24 mit Zuleitungskabel 26 und der Klemmring 28 - soweit nicht schon vorhanden auch der Gleichrichter 39 und die Zeitschaltuhr 33 - bilden zusammen einen Umrüstsatz.

Die Steckdose führt der Zeitschaltuhr Wechselstrom zu. Die Kontakte 40 des Gleichrichters 39 werden in die Buchsen 35 der Zeitschaltuhr 33 eingeführt, der Stecker 27 des Zuleitungskabels 26 in die Buchsen 41 des Gleichrichters 39. An der Skala 43 wird mit Hilfe des Stellknopfes 42 die gewünschte Temperatursenkung eingestellt.

Der Widerstand der Heizpatrone 24 ist so bemessen, daß bei einer angelegten Spannung von z. B. 6 Volt der Dehnkörper 14 um 6°C angeheizt wird. Der Thermostat regelt daher die Raumtemperatur 6° tiefer ein als ohne diese Heizung. Dies geschieht während der durch die Schaltuhr 33 eingestellten Zeit. Entsprechend führen größere oder kleinere Spannungen an den Buchsen 41 zu einer größeren oder kleineren Senkung der Raumtemperatur. Die Zahlen der Skala 43 lassen sich daher auch als Gradzahlen der Temperatursenkung verstehen, so daß eine sinnfällige Einstellung möglich ist.

Auf diese Weise ist der Thermostat 11 so verbessert, daß er für vorbestimmte Zeiten auf eine Temperatur regelt, die von der Temperatur, auf die er mit Hilfe der Kappe 22 eingestellt ist, um einstellbare Werte abweicht. Das erlaubt eine Energie sparende Temperaturführung, die genau an den tatsächlichen Bedarf angepaßt ist.

Das wird erreicht mit Hilfe der als Nachrüstsatz dienenden Vorrichtung, ohne daß in den Aufbau des Thermostaten eingegriffen werden müßte, das bedeutet rasch und zu niedrigem Preis. Dabei können handelsübliche Teile als Zeitschaltuhr und Gleichrichter verwendet werden. Diese beiden Funktionen können aber auch in einem besonderen Gerät zusammengefaßt sein. Es läßt sich am einfachsten durch Einstecken in eine Steckdose an das Lichtnetz anschließen, kann aber auch auf andere bekannte Weise mit einer Stromquelle verbunden werden. Auf jeden Fall ist zweckmäßig, die Heizpatrone mit Schwachstrom zu betreiben, da das einfacheren Aufbau und bessere Regelbarkeit mit sich bringt.

**Patentansprüche**

1. Thermostatanordnung für Ventilsteuerung mit einem Thermostaten (11), der einen Dehnstoff enthaltenden Dehnkörper (14) hat, welcher temperaturabhängig einen das Schließglied (4) des Ventils beeinflussenden Stößel (16) verstellt und undrehbar an einem mittels eines Klemmrings am Gehäuse (1) des Ventils (2) angebrachten Halter (12) befestigt ist, wobei ein Heizelement (24) so angeordnet ist, daß es mit dem Dehnkörper in wärmeleitender Verbindung steht, dadurch gekennzeichnet, daß in eine Ausnehmung des Halters (12) das als Heizpatrone (24) ausgebildete Heizelement so eingesetzt ist, daß es den Dehnkörper (14) berührt, und daß ein von ihm nach außen führendes Zuleitungskabel (26) an dem Halter (12) mit Hilfe des Klemmrings (28) befestigt und zu einer insbesondere handelsüblichen Zeitschaltuhr geführt ist, welche in einstellbaren Zeiträumen der Heizpatrone (24) einen bestimmten Heizstrom zuführt, und daß die Heizpatrone (24) zusammen mit dem Klemmring (28) einen Nachrüstsatz bildet, dessen Klemmring (28) einen den Thermostaten (11) am Ventil (2) festhaltenden Klemmring ersetzt und eine zusätzliche Klemmeinrichtung für das Zuleitungskabel (26) hat.

2. Thermostatanordnung nach Anspruch 1, dadurch gekennzeichnet, daß das Zuleitungskabel (26) einen Stecker (27) hat, welcher in Buchsen (35) einer mit der Zeitschaltuhr (33) verbundenen Gleichstromquelle paßt, und daß die Zeitschaltuhr (33) ihrerseits in eine Steckdose passende Kontaktstifte (34) hat.

3. Thermostatanordnung nach Anspruch 2, dadurch gekennzeichnet, daß als Gleichstromquelle ein insbesondere auf die Zeitschaltuhr (33) aufsteckbarer Gleichrichter (39) dient, dessen Ausgangsspannung einstellbar ist.

4. Thermostatanordnung nach Anspruch 3, dadurch gekennzeichnet, daß die zum Einstellen dienende Skala (43) des Gleichrichters (39) mit Marken versehen ist, welche das Einstellen einer bestimmten während der Wirksamkeit der Heizpatrone (24) auftretenden Absenkung der vom Thermostaten (11) eingeregelten Temperatur gestatten.

5. Thermostatanordnung nach Anspruch 4, dadurch gekennzeichnet, daß der Widerstand der Heizpatrone (24) so bemessen ist, daß die am Gleichrichter (39) nach der Skala (43) eingestellte Abgabespannung in Volt der Absenkung der Temperatur in Grad entspricht.

**Claims**

1. Thermostat arrangement for valve control by a thermostat (11) which has an expansion body (14) containing an expansion compound, and this expansion body, dependent on temperature, adjusts a tappet (16) influencing the closing member (4) of the valve and is non-rotatably mounted on a holder (12) which is retained on the case (1) of the valve (2) by a clamp ring, with a heating element (24) arranged in such a way that it is in heatconducting connection with the expansion body, characterized in that the heating element in the form of a cartridge type heater (24) is inserted in a recess of holder (12) so that it is in touch with the expansion body (14) and that an external feed cable (26) is fitted to the holder (12) by means of the clamp ring (28) and runs from the heater to a particularly commercially available timer clock, which supplies a specific heating current to the cartridge type heater (24) at adjustable intervals of time, the cartridge type heater together with the clamp ring (28) forming a complementary equipment set, the clamp ring (28) of which replaces a clamp ring retaining the thermostat (11) on valve (2) and has an additional clamping device for the feed cable (26).

2. Thermostat arrangement as claimed in claim 1, characterized in that the feed cable (26) has a plug (27) which fits into sockets (35) of a direct-current source connected to the timer clock (33), and that the timer clock (33) in turn has contact pins (34) fitting into a socket outlet.

3. Thermostat arrangements as claimed in claim 2, characterized in that in particular a rectifier (39) that plugs on the timer clock (33) is used as a direct-current source, with the rectifier's output voltage being adjustable.

4. Thermostat arrangement as claimed in claim 3, characterized in that the scale (43) serving for adjustment of the rectifier (39) is provided with markings, which permit the adjustment of a specific lowering of the temperature adjusted by the thermostat (11) occuring during the active state of the cartridge type heater (24).

5. Thermostat arrangement as claimed in claim 4, characterized in that the resistance of the cartridge type heater (24) is so designed that the discharge voltage in Volts set on the rectifier (3) according to the scale (43) is equivalent to the lowering of the temperature in Degrees.

**Revendications**

1. Montage de thermostat pour une commande de vanne à l'aide d'un thermostat (11) comportant un organe dilatable (14) contenant un matiériau dilatable et qui, en fonction de la température, déplace un poussoir (16) influençant l'organe de fermeture (4) de la vanne et est fixé solidairement en rotation sur un support (12) rapporté par l'intermédiaire d'un collier sur le carter (1) de la vanne (2), un élément chauffant (24) étant disposé de manière à être relié par conduction thermique à l'organe dilatable, montage caractérisé en ce que l'élément chauffant en forme de cartouche chauffante (24) est placé dans une cavité du support (12), cet élément étant en contact avec l'organe dilatable (14) et en ce qu'un câble d'alimentation (26) sortant de cet élément est fixé au support (12) à l'aide du collier (28) et est relié notamment à une horloge du commerce, qui fournit à intervalle réglable un courant de chauffage déterminé à la cartouche chauffante (24) et la cartouche chauffante (24) ainsi que le collier (28) forment un équipement de seconde monte dont le collier (28) remplace un collier maintenant le thermostat (11) sur la vanne (2) et comporte un dispositif de serrage supplémentaire pour le câble d'alimentation (28).

2. Montage de thermostat selon la revendication 1, caractérisé en ce que le câble d'alimentation (28) comporte une fiche (27) qui s'adapte dans une douille (35) d'une source de courant redressée et reliée à l'horloge (33) et en ce que l'horloge (33) présente des fiches de contact (34) qui s'adaptent à une douille.

3. Montage de thermostat selon la revendication 2, caractérisé en ce que la source de courant redressée est notamment un redresseur (33) susceptible d'être enfiché sur l'horloge (33) et dont la tension de sortie est réglable.

4. Montage de thermostat selon la revendication 3, caractérisé en ce que l'échelle (43) servant à régler le redresseur (39) est munie de repères qui permettent le réglage d'une certaine chute de température réglée par le thermostat (11) pendant l'action de la cartouche chauffante (24).

5. Montage de thermostat selon la revendication 4, caractérisé en ce que la résistance de la cartouche chauffante (24) est dimensionnée pour la tension en volts réglée sur le redresseur (39) suivant l'échelle (43) correspondant à une chute de température en degres.

Fig.1

Fig.2

Fig.3

Fig.4

Fig.5

Fig.6